# EUROPÄISCHE PATENTANMELDUNG

(11) **EP 4 759 649 A1**
(43) Veröffentlichungstag der Anmeldung: **17.06.2026**
(21) Anmeldenummer: 25221185.9
(22) Anmeldetag: 05.12.2025
(51) Int. Cl.: B60T 8/1755, B60T 8/1761

(54) **VERFAHREN ZUM BETREIBEN EINES KRAFTFAHRZEUGS, COMPUTERPROGRAMMPRODUKT, SPEICHERMEDIUM, COMPUTEREINRICHTUNG**

(30) Priorität: 10.12.2024 DE 102024211741
(71) Anmelder: Robert Bosch GmbH, 70442 Stuttgart (DE)
(72) Erfinder: Glaser, Markus, 71065 Sindelfingen (DE)

(57) **Zusammenfassung**

Die Erfindung betrifft ein Verfahren zum Betreiben eines Kraftfahrzeugs (1), wobei das Kraftfahrzeug (1) zumindest eine Achse (2) mit zumindest einem Rad (3) aufweist, wobei dem Rad (3) eine elektrische Antriebsvorrichtung (4) mit einer ansteuerbaren ersten Aktuatoranordnung (5), aufweisend eine elektrische Maschine (6), zugeordnet ist, und wobei dem Rad (3) eine hydraulische Radbremsvorrichtung (7) mit einer ansteuerbaren zweiten Aktuatoranordnung (8), insbesondere aufweisend eine einer Hydraulikpumpe zugeordnete elektrische Maschine und/oder eine Hydraulikventilanordnung, zugeordnet ist. Erfindungsgemäß wird jeder der Aktuatoranordnungen (5,8) jeweils zumindest ein, insbesondere radindividueller, Schlupf-Grenzwert (λ_{Hyd,Vor}, λ_{Elec,min}, λ_{Hyd}, λ_{Rad,lim}) zugeordnet, und werden die Aktuatoranordnungen (5,8) zum Erfüllen einer Bremsanforderung in Abhängigkeit von den vorgegebenen Schlupf-Grenzwerten (λ_{Hyd,Vor}, λ_{Elec,min}, λ_{Hyd}, λ_{Rad,lim}) angesteuert.

## Beschreibung

Die Erfindung betrifft ein Verfahren zum Betreiben eines Kraftfahrzeugs, wobei das Kraftfahrzeug zumindest eine Achse mit zumindest einem Rad aufweist, wobei dem Rad eine elektrische Antriebsvorrichtung mit einer ansteuerbaren ersten Aktuatoranordnung, aufweisend eine elektrische Maschine, zugeordnet ist, und wobei dem Rad eine hydraulische Radbremsvorrichtung mit einer ansteuerbaren zweiten Aktuatoranordnung, insbesondere aufweisend eine einer Hydraulikpumpe zugeordnete elektrische Maschine und/oder eine Hydraulikventilanordnung, zugeordnet ist.

Weiter betrifft die Erfindung ein Computerprogrammprodukt, das das obenstehende Verfahren durchführt, wenn das Computerprogrammprodukt auf einer Computereinrichtung ausgeführt wird. Außerdem betrifft die Erfindung ein maschinenlesbares Speichermedium mit einem derartigen Computerprogrammprodukt sowie eine Computereinrichtung, die speziell dazu hergerichtet ist, das Computerprogrammprodukt auszuführen beziehungsweise das oben genannte Verfahren durchzuführen.

### Stand der Technik

Kraftfahrzeuge mit hydraulischen Radbremsvorrichtungen und Fahrdynamikregelungsystemen sind aus dem Stand der Technik bekannt. Heutige Fahrdynamikregelsysteme umfassen üblicherweise ein Fahrdynamiksteuergerät und eine Bremshydraulik. Die Bremshydraulik ist über Bremsleitungen mit Radbremszylindern der Radbremsvorrichtungen verbunden. Über verschiedene Ventile und eine Hydraulikpumpe kann der Bremsdruck in den Radbremszylindern eingestellt werden.

Beispielsweise ist aus der Offenlegungsschrift DE 43 05 155 A1 der Anmelderin ein derartiges Fahrdynamikregelsystem bekannt. Darin ist beschrieben, wie der Fahrdynamikregler mit der Bremshydraulik interagiert. Der Fahrdynamikregler besteht im Wesentlichen aus einem Giergeschwindigkeitsregler. Der Giergeschwindigkeitsregler erhält von einer Messdatenerfassung ein Giergeschwindigkeitssignal, Radgeschwindigkeitssignale zur Bildung der Fahrzeuggeschwindigkeit, ein Lenkwinkelsignal und ein Querbeschleunigungssignal. Der Giergeschwindigkeitsregler bildet sich einen Sollverlauf der Giergeschwindigkeit unter Zuhilfenahme der Messsignale und physikalischer Modelle für die Gierbewegung des Fahrzeugs. Je nach Fahrsituation generiert der Giergeschwindigkeitsregler einen hydraulischen Bremseingriff zur Stabilisierung des Fahrzeugs. Dazu wird von einem unterlagerten Radregler der momentane Sollradschlupf erhöht oder erniedrigt beziehungsweise der Sollradbremsdruck durch die Ausgabe von Ventilöffnungszeiten der Bremshydraulik verändert.

Durch die ständige Weiterentwicklung der Fahrdynamikregelsysteme sind neben dem Giergeschwindigkeitsregler weitere Funktionen entstanden. Dazu gehören eine Umkippverhinderung, auch Roll Over Mitigation (ROM) oder Roll Movement Intervention (RMI) genannt, sowie eine Anhängerstabilisierung, auch Trailer Sway Mitigation (TSM) genannt. All diese Funktionen gehören mittlerweile zu den querdynamischen Stabilisierungsfunktionen eines Fahrdynamikregelsystems und allen gemeinsam ist die Nutzung einer Bremshydraulik, um einen hydraulischen Bremseingriff zur Stabilisierung des Fahrzeugs zu erzeugen. Die immer weiter fortschreitende Elektrifizierung des Fahrzeugs führt zu Antriebskonzepten mit radindividuellen Elektromotoren. Diese können nicht nur Antriebsmomente erzeugen, sondern auch Bremsmomente. Sind nun beide Steller, hydraulische Radbremse und elektrischer Antriebsmotor, an einem Rad des Fahrzeugs verbaut, können beide von den querdynamischen Stabilisierungsfunktionen zur Erzeugung eines Bremseingriffs im Falle einer Stabilisierung des Fahrzeugs verwendet werden.

### Offenbarung der Erfindung

Das erfindungsgemäße Verfahren mit den Merkmalen des Anspruchs 1 zeichnet sich dadurch aus, dass jeder der Aktuatoranordnungen jeweils zumindest ein, insbesondere radindividueller, Schlupf-Grenzwert zugeordnet wird, und dass die Aktuatoranordnungen zum Erfüllen einer Bremsanforderung in Abhängigkeit von den vorgegebenen Schlupf-Grenzwerten angesteuert werden. Wie eingangs beschrieben, verwenden Fahrdynamikregelsysteme üblicherweise hydraulische Radbremsen zur Stabilisierung des Kraftfahrzeugs. Es sind aber auch andere Bremsenvarianten möglich, beispielsweise elektromechanische Bremsen. Hat das Kraftfahrzeug, wie erfindungsgemäß vorgesehen, einen weiteren Steller an dem jeweiligen Rad, vorliegend einen elektrischen Antriebsmotor, kann die Stabilisierungsaufgabe durch eine optimale Ansteuerung des dadurch entstandenen, die Radbremse und den Antriebsmotor umfassenden, Rad-Kombi-Stellers gelöst werden. Dadurch wird vorteilhaft sichergestellt, dass die beiden Aktuatoranordnungen optimal in die Fahrdynamikregelung im Rahmen einer Schlupfregelung beim Erfüllen einer Bremsanforderung einbezogen und verwendet werden. Die Bremsanforderung wird insbesondere mittels einer Sensoranordnung erfasst und/oder ermittelt, von einer Betätigungsvorrichtung und/oder einer Steuereinrichtung vorgegeben und/oder empfangen. Durch die Erfindung wird insoweit eine Ansteuerungsstrategie bereitgestellt, bei der beide Aktuatoranordnungen gemeinsam optimal angesteuert werden, um ein Bremsmoment an dem entsprechenden Rad zu erzeugen. Dabei geht es insbesondere um die Aufteilung des Bremsmoments in ein hydraulisches und elektrisches Bremsmoment sowie die notwendige Radschlupfüberwachung. Gerade für die Radschlupfüberwachung wird durch die Erfindung insbesondere eine Möglichkeit aufgezeigt, wie diese Aufgabe von einem unterlagerten Radregler über die insbesondere hydraulische Bremse und einem Drehzahlregler über den elektrischen Antriebsmotor gelöst werden kann. Dazu werden die erfindungsgemäß vorgesehenen Schlupf-Grenzwerte verwendet. Es sei bereits hier rein vorsorglich darauf hingewiesen, dass die im Folgenden verwendete Nummerierung der Schlupf-Grenzwerte lediglich deren Unterscheidung, nicht jedoch deren Priorisierung oder Vorgabe dient, und auch keine notwendige Abhängigkeit der Grenzwerte voneinander impliziert. Erfindungsgemäß müssen lediglich zwei unterschiedliche Schlupf-Grenzwerte verwendet werden, von denen einer zumindest der ersten Aktuatoranordnung und ein anderer zumindest der zweiten Aktuatoranordnung zugeordnet ist, sodass sicher festgelegt ist, welche der beiden Aktuatoranordnungen wann und wie im Rahmen des erfindungsgemäßen Verfahrens angesteuert und verwendet wird. Beispielsweise werden dazu die im Folgenden als dritter und vierter Schlupf-Grenzwert beschriebenen Grenzwerte als Mindestvoraussetzung verwendet. Daraus ergibt sich eine Priorisierung der ersten Aktuatoranordnung, sodass vorzugsweise ein Bremsmoment möglichst überwiegend, insbesondere ausschließlich, mittels der ersten Aktuatoranordnung gestellt und geregelt wird. Die Reihenfolge der sich daraus ergebenden, im Folgenden noch beispielhaft detaillierter beschriebenen, Bremsmomentenverteilung hat Vorteile hinsichtlich des Komforts und Zeitpunkt der Fahrzeugstabilisierung. Die Ansteuerung des elektrischen Antriebsmotors bei der Fahrzeugstabilisierung kann früher beginnen und in einem Bereich der Fahrzeugbewegung stattfinden, der noch außerhalb des querdynamisch (Gierratenregelung) und kippkritischen (Umkippverhinderung) Bereichs liegt. Diese Bereiche sind aus hydraulischer Sicht im Hinblick auf den Fahrkomfort undenkbar, denn bei der Ansteuerung der hydraulischen Bremse treten immer Geräusche durch die Hydraulikpumpe und der Schaltung von Ventilen innerhalb der Bremshydraulik auf. Die ständige Wahrnehmbarkeit der querdynamischen Stabilisierungsfunktion durch den Fahrer in einem eher unkritischen Bereich der Fahrzeugbewegung reduziert deutlich den Fahrkomfort. Ein weiterer Vorteil der priorisierten Verwendung der ersten Aktuatoranordnung ist die Verbesserung der Regelgüte beim Einregeln des Radschlupfs. Beispielsweise ermöglicht eine hohe Zykluszeit im Bereich von Millisekunden, insbesondere von 1 ms, für eine Drehzahlregelung der elektrischen Maschine bessere Radschlupfregelungen gerade im instabilen Schlupfbereich des Rades. Hiervon profitiert nicht nur die Gierratenregelung, sondern auch die Umkippverhinderung, die deutlich häufiger mit starken Aufbaubewegungen des Fahrzeugs konfrontiert ist. Dabei entstehen starke Radlastschwankungen, die wiederum einen starken Einfluss auf das Radschlupfverhalten haben. Zusammenfassend ergeben sich durch den erfindungsgemäßen Ansatz einer Schlupfwert-abhängigen Ansteuerung des Rad-Kombi-Stellers als Vorteile die optimale Verteilung der Bremsmomentenanteile auf die insbesondere hydraulische Bremse und den elektrischen Antriebsmotor zur Verbesserung von Komfort und Zeitpunkt der Fahrzeugstabilisierung, sowie die Verbesserung der Radschlupfregelung hinsichtlich der Regelgüte, weil dies priorisiert über die Drehzahlregelung des elektrischen Antriebsmotors geschieht. Die erfindungsgemäß vorgesehene Verwendung der entsprechenden Aktuator-spezifischen Schlupf-Grenzwerte stellt eine besonders vorteilhaft einfache und elegante Lösung dar, um diese Priorisierung robust umzusetzen.

Gemäß einer bevorzugten Weiterbildung der Erfindung wird zumindest einer der Schlupf-Grenzwerte in Abhängigkeit von einer Leistungsfähigkeit der jeweiligen Aktuatoranordnung und/oder einem Fahrmodus des Kraftfahrzeugs, insbesondere umfassend einen Komfortmodus und/oder einen Sportmodus, vorgegeben. Durch eine derartige leistungsabhängige und/oder modusabhängige Vorgabe des jeweiligen Schlupf-Grenzwerts ist vorteilhaft sichergestellt, dass der jeweilige Schlupf-Grenzwert optimal an einen Gesundheitszustand der jeweiligen Aktuatoranordnung und/oder des von dem jeweiligen Fahrer gewünschten Fahrverhaltens angepasst ist. Beispielsweise wird der entsprechende Schlupf-Grenzwert derart gewählt, dass bei verringerter Leistungsfähigkeit einer der Aktuatoranordnungen die jeweils andere Aktuatoranordnung einen höheren Anteil an einem zu stellenden Bremsmoment zum Erfüllen der Bremsanforderung übernimmt. Ebenso wird beispielsweise in einem Sportmodus ein höherer Schlupf-Grenzwert als in einem Komfortmodus vorgegeben beziehungsweise ein höherer Radschlupf zugelassen, bevor beispielsweise eine entsprechende aktive Schlupfregelung erfolgt. Insbesondere wird zumindest einer der Schlupf-Grenzwerte mit einem vorgegebenen Sicherheitsabstand zu und/oder in einem bestimmten Bereich, beispielsweise bis 50 %, 75 % oder 90 %, der maximalen Leistungsfähigkeit festgelegt, um die Aktuatoranordnung nicht übermäßig zu belasten.

Besonders bevorzugt wird ein Schlupf-Istwert des Radschlupfs ermittelt, und zunächst nur die erste Aktuatoranordnung, insbesondere mittels einer Drehzahlregelung der elektrischen Maschine, in Abhängigkeit von dem Schlupf-Istwert zum Erzeugen eines elektrischen Bremsmoments angesteuert. Durch eine derartige Ansteuerung ergibt sich der Vorteil, dass die erste Aktuatoranordnung priorisiert verwendet wird. Insbesondere wird zunächst versucht, ein zum Erfüllen der Bremsanforderung notwendiges zu stellendes Bremsmoment ausschließlich mittels der ersten Aktuatoranordnung, insbesondere durch Betreiben der elektrischen Maschinen einem Generator- oder Rekuperationsbetrieb, bereitzustellen. Die zweite Aktuatoranordnung wird dann nur bedarfsweise hinzu geschaltet.

Gemäß einer bevorzugten Weiterbildung der Erfindung wird ein erster Schlupf-Grenzwert vorgegeben und der zweiten Aktuatoranordnung zugeordnet, und, wenn der Schlupf-Istwert den ersten Schlupf-Grenzwert zumindest erreicht, insbesondere überschreitet, die zweite Aktuatoranordnung, insbesondere die der Hydraulikpumpe zugeordnete elektrische Maschine, zusätzlich zum Vorbefüllen eines Hydraulikkreises der Radbremsvorrichtung angesteuert. Durch die entsprechende Vorgabe und Verwendung des ersten Schlupf-Grenzwerts ist vorteilhaft sichergestellt, dass die zweite Aktuatoranordnung rechtzeitig zum Erzeugen eines Bremsmoments bereit ist, beispielsweise wenn der Schlupf-Istwert sich weiter erhöht. Es wird insoweit vorteilhaft die Reaktionszeit zum Ansteuern der zweiten Aktuatoranordnung weiter verringert. Zwingend notwendig für das erfindungsgemäße Verfahren ist dies jedoch nicht.

Besonders bevorzugt wird ein zweiter Schlupf-Grenzwert vorgegeben und der zweiten Aktuatoranordnung zugeordnet, wobei der zweite Schlupf-Grenzwert insbesondere größer ist als der erste Schlupf-Grenzwert, und, wenn der Schlupf-Istwert den zweiten Schlupf-Grenzwert zumindest erreicht, insbesondere überschreitet, die zweite Aktuatoranordnung zum Erzeugen eines zusätzlichen hydraulischen Bremsmoments angesteuert. Durch die entsprechende Vorgabe und Verwendung des zweiten Schlupf-Grenzwerts ergibt sich der Vorteil, dass die zweite Aktuatoranordnung in einer durch den Grenzwert definierten Schlupfsituation sicher zugeschaltet wird, um die erste Aktuatoranordnung beim Erfüllen der Bremsanforderung zu unterstützen. Der zweite Schlupf-Grenzwert wird beispielsweise in Abhängigkeit von einer Leistungsfähigkeit der ersten Aktuatoranordnung festgelegt, um sicherzustellen, dass diese nicht überlastet wird, indem die zweite Aktuatoranordnung rechtzeitig zugeschaltet wird. Mittels des Schlupf-Grenzwerts wird insoweit bestimmt, welcher Anteil des Bremsmoments über die erste Aktuatoranordnung beziehungsweise deren elektrische Maschine gestellt wird. Dabei wird durch den Schlupf-Grenzwert auch eine obere Grenze für das Bremsmoment definiert. Nur Bremsmomentanteile, die diese Grenze überschreiten, werden mittels der zweiten Aktuatoranordnung und damit der hydraulischen Radbremsvorrichtung gestellt.

Gemäß einer bevorzugten Weiterbildung der Erfindung wird ein dritter Schlupf-Grenzwert, insbesondere in einem instabilen Bereich einer Radschlupfkurve, vorgegeben und der ersten Aktuatoranordnung zugeordnet, wobei der dritte Schlupf-Grenzwert insbesondere größer ist als der erste und/oder zweite Schlupf-Grenzwert, und, wenn der Schlupf-Istwert den dritten Schlupf-Grenzwert zumindest erreicht, insbesondere überschreitet, die erste Aktuatoranordnung zum Einhalten des dritten Schlupf-Grenzwerts, insbesondere zum Reduzieren des Schlupf-Istwerts auf den dritten Schlupf-Grenzwert, angesteuert. Durch die entsprechende Vorgabe und Verwendung des dritten Schlupf-Grenzwerts ist vorteilhaft sichergestellt, dass der Radschlupf mittels der ersten Aktuatoranordnung geregelt wird. Führen die durch die beiden Aktuatoranordnungen gestellten Bremsmomentenanteile zu einem entsprechend hohen Radschlupf, wird versucht, das Rad bei Überschreiten des entsprechenden dritten Schlupf-Grenzwerts mittels der ersten Aktuatoranordnung, insbesondere durch eine Drehzahlvorgabe an die elektrische Maschine, auf dem gewünschten Radschlupf zu halten. Insbesondere entspricht dieser durch den dritten Schlupf-Grenzwert charakterisierte gewünschte Radschlupf einem zum Erfüllen der Bremsanforderung optimalen Radschlupf.

Besonders bevorzugt wird in Abhängigkeit von dem dritten Schlupf-Grenzwert ein Drehzahl-Grenzwert für die elektrische Maschine der ersten Aktuatoranordnung vorgegeben, und die elektrische Maschine in Abhängigkeit von dem Drehzahl-Grenzwert mittels einer Drehzahlregelung angesteuert. Durch eine derartige Drehzahlregelung ergibt sich der Vorteil, dass der Radschlupf besonders exakt geregelt wird.

Gemäß einer bevorzugten Weiterbildung der Erfindung wird ein vierter Schlupf-Grenzwert vorgegeben und der zweiten Aktuatoranordnung zugeordnet, wobei der vierte Schlupf-Grenzwert insbesondere größer ist als der erste, zweite und/oder dritte Schlupf-Grenzwert, und, wenn der Schlupf-Istwert den vierten Schlupf-Grenzwert zumindest erreicht, insbesondere überschreitet, die zweite Aktuatoranordnung, insbesondere die Hydraulikventilanordnung, zum Einhalten des vierten Schlupf-Grenzwerts, insbesondere zum Reduzieren des Schlupf-Istwerts auf den vierten Schlupf-Grenzwert, angesteuert. Durch die entsprechende Vorgabe und Verwendung des vierten Schlupf-Grenzwerts ist vorteilhaft sichergestellt, dass, wenn die erste Aktuatoranordnung es nicht schafft, den Radschlupf in der Nähe des ihr zugeordneten Schlupf-Grenzwerts zu halten, die zweite Aktuatoranordnung eine unterstützende Regelung durchführt, um die Fahrsicherheit stets zu gewährleisten. Die zweite Aktuatoranordnung führt insoweit im weiteren Verlauf der Radschlupfregelung nur bedarfsweise eine Regelung des Radschlupfs aus, nämlich nur dann, wenn der vierte Schlupf-Grenzwert überschritten wird. Erst dann wird über die Schlupfregelung die hydraulische Bremse geregelt.

Besonders bevorzugt wird die Ansteuerung zum Einhalten des dritten und/oder vierten Schlupf-Grenzwerts beendet, sobald der Schlupf-Istwert den jeweiligen Schlupf-Grenzwert unterschreitet. Durch das entsprechende Beenden der Ansteuerung zum Einhalten des oder der jeweiligen Grenzwerte ergibt sich der Vorteil, dass das Verfahren besonders effizient durchgeführt wird. Dies wird insbesondere schrittweise durchgeführt, das heißt, sobald der vierte Schlupf-Grenzwert wieder unterschritten wird, stoppt die Schlupfregelung mittels der zweiten Aktuatoranordnung, und der Radschlupf wird weiterhin mittels der ersten Aktuatoranordnung, beispielsweise über die vorstehend genannte Drehzahlvorgabe an die elektrische Maschine, geregelt. Wird im weiteren Verlauf der Schlupfregelung auch der dritte Schlupf-Grenzwert unterschritten, wird auch diese Regelung beendet.

Das erfindungsgemäße Computerprogrammprodukt zur Ausführung auf einer Computereinrichtung mit den Merkmalen des Anspruchs 10 zeichnet sich dadurch aus, dass es bei bestimmungsgemäßem Gebrauch das erfindungsgemäße Verfahren ausführt. Es ergeben sich hierdurch die bereits genannten Vorteile.

Das erfindungsgemäße maschinenlesbare Speichermedium mit den Merkmalen des Anspruchs 11 zeichnet sich durch das darauf gespeicherte erfindungsgemäße Computerprogrammprodukt aus.

Die Computereinrichtung mit den Merkmalen des Anspruchs 12 zeichnet sich dadurch aus, dass die Computereinrichtung speziell dazu hergerichtet ist, das erfindungsgemäße Computerprogrammprodukt auszuführen beziehungsweise das erfindungsgemäße Verfahren durchzuführen. Auch hierdurch ergeben sich die oben bereits genannten Vorteile. Vorzugsweise ist die Computereinrichtung eine einem Kraftfahrzeug zugeordnete, insbesondere in dem Kraftfahrzeug angeordnete Steuervorrichtung und/oder Steuereinrichtung.

Weitere bevorzugte Merkmale und Merkmalskombinationen ergeben sich aus dem zuvor Beschriebenen sowie aus den Ansprüchen. Im Folgenden wird die Erfindung anhand der Zeichnungen näher erläutert. Dazu zeigen
- Figur 1: ein vorteilhaftes Verfahren zum Betreiben eines Kraftfahrzeugs,
- Figur 2: ein erstes Beispiel von Moment- und Schlupfverläufen während der Durchführung des Verfahrens,
- Figur 3: ein zweites Beispiel der Moment- und Schlupfverläufe, und
- Figur 4: ein drittes Beispiel der Moment- und Schlupfverläufe.

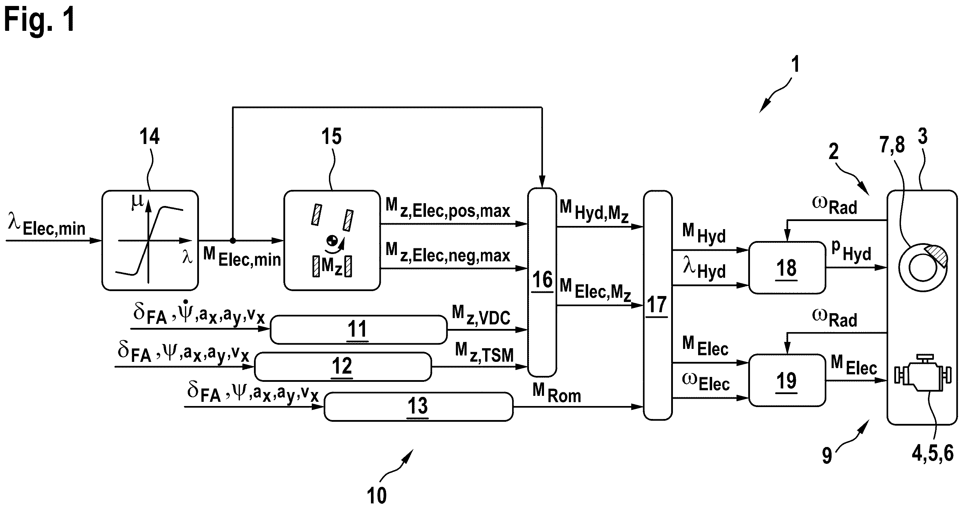

Figur 1 zeigt ein vorteilhaftes Verfahren zum Betreiben eines Kraftfahrzeugs 1 anhand eines Blockdiagramms mit den Mechanismen für eine Ansteuerung eines Rad-Kombi-Stellers des Kraftfahrzeugs 1 durch querdynamische Stabilisierungsfunktionen. Die beteiligten Komponenten sind lediglich schematisch angedeutet.

Das Kraftfahrzeug 1 weist dabei zumindest eine Achse 2 mit zumindest einem Rad 3 auf. Weiter weist das Kraftfahrzeug 1 eine elektrische Antriebsvorrichtung 4 mit einer ansteuerbaren ersten Aktuatoranordnung 5 auf. Die erste Aktuatoranordnung 5 weist eine elektrische Maschine 6 auf.

Das Kraftfahrzeug 1 weist außerdem eine hydraulische Radbremsvorrichtung 7 mit einer nicht näher dargestellten, ansteuerbaren zweiten Aktuatoranordnung 8 auf. Die zweite Aktuatoranordnung 8 weist insbesondere eine Hydraulikpumpe, eine der Hydraulikpumpe zugeordnete elektrische Maschine und/oder eine Hydraulikventilanordnung auf. Die beiden Aktuatoranordnungen 5, 8 sind jeweils dem Rad 3 zugeordnet und damit Bestandteil eines bereits erwähnten Rad-Kombi-Stellers 9.

Schließlich weist das Kraftfahrzeug 1 noch zumindest eine Computereinrichtung 10 auf, die dazu ausgebildet ist, das noch zu beschreibende Verfahren zumindest teilweise, insbesondere vollständig auszuführen, beispielsweise die Aktuatoranordnungen 5, 8 koordiniert anzusteuern. Vorzugsweise weist die Computereinrichtung 10 zumindest eines, insbesondere alle, der nachfolgend beschriebenen Module auf und/oder ist dazu ausgebildet, zumindest eine der nachfolgend genannten Funktionen auszuführen beziehungsweise entsprechende Verfahrensschritte durchzuführen, die bereits genannten querdynamischen Stabilisierungsfunktionen betreffend. Die Computereinrichtung 10 ist insbesondere als elektronische Steuervorrichtung und/oder Steuereinrichtung (ECU) ausgebildet.

Wie bereits erwähnt, sind in der Figur 1 die Mechanismen für eine Ansteuerung des Rad-Kombi-Stellers 9 durch querdynamische Stabilisierungsfunktionen dargestellt. Dazu sind verschiedene Funktionen oder Module (Software- und/oder Hardware), ihre Verschaltung hinsichtlich der jeweils verwendeten Eingangsgrößen und Ausgangsgrößen bis hin zu dem tatsächlichen Rad-Kombi-Steller 9 eingezeichnet, um das erfindungsgemäße Verfahren zu erläutern.

Die querdynamischen Stabilisierungsfunktionen des Kraftfahrzeugs 1 umfassen vorliegend eine Gierratenregelung, auch Vehicle Dynamics Control (VDC) genannt, dargestellt als ein erstes Modul 11, eine Anhängerstabilisierung, auch Trailer Sway Mitigation (TSM) genannt, dargestellt als ein zweites Modul 12, und eine Umkippverhinderung, auch Roll Over Mitigation (ROM) oder Roll Movement Intervention (RMI) genannt, dargestellt als ein drittes Modul 13.

Allen Funktionen oder Modulen 11-13 gemeinsam ist die Nutzung von bereitgestellten Sensorsignalen zur Messung der Fahrzeugbewegung (Giergeschwindigkeit *ψ̇*, Längsbeschleunigung *aₓ,* Querbeschleunigung *a_{y}* und Fahrzeuggeschwindigkeit *vₓ*) und eines Lenkwunsches des Fahrers (Lenkwinkel Vorderachse *δ_{FA}*) als jeweilige Eingangssignale. Für die Ansteuerung des Rad-Kombi-Stellers 9 ist es wichtig zu wissen, bis zu welcher Grenze die elektrische Maschine 6 der ersten Aktuatoranordnung 5, also der Antriebsmotor, genutzt werden soll.

Dazu wird ein Giermomentenpotential für diesen Steller bestimmt. Das Giermomentenpotential bestimmt sich aus einem physikalischen Radmodell (beispielsweise das aus der Literatur bekannte Pacejka-Radmodell) und einem Zweispurmodell für das Kraftfahrzeug 1, dargestellt als ein gemeinsames viertes Modul 14. Das Radmodell erhält eine Schlupfgrenze *λ_{Elec,min}* als Eingangsgröße. Diese kennzeichnet die Schlupfgrenze des Rads 3 beim Bremsen durch die elektrische Maschine 6.

Eine aus dem Radmodell als Ausgangsgröße gewonnene Momentengrenze *M_{Elec,min}* wird mit Hilfe des Zweispurmodells in einem fünften Modul 15 als Eingangsgröße verwendet und dort in eine erste und eine zweite Giermomentengrenze *M_{z,Elec,pos,max}* und *M_{z,Elec,neg,max}* um die Hochachse umgerechnet. Dabei bezeichnet die erste Giermomentengrenze *M_{z,Elec,pos,max}* das maximal mögliche Giermoment im Uhrzeigersinn (pos) und die zweite Giermomentengrenze *M_{z,Elec,neg,max}* das maximal mögliche Giermoment gegen den Uhrzeigersinn (neg).

Diese Giermomentengrenze *M_{z,Elec,pos,max}* und *M_{z,Elec,neg,max}* gehen als Ausgangsgrößen des fünften Moduls 15 zusammen mit einem ersten Giermomentenanteil *M_{z,VDC}* als Ausgangsgröße des ersten Moduls 11 und einem zweiten Giermomentenanteil *M_{z,TSM}* als Ausgangsgröße des zweiten Moduls 12 in eine Giermomentenverteilung ein, dargestellt als sechstes Modul 16.

In der Giermomentenverteilung werden die Giermomentenanteile *M_{z,VDC}* und *M_{z,TSM}* als Eingangsgrößen oder Anforderungen verglichen mit den Giermomentengrenzen *M_{z,Elec,pos,max}* und *M_{z,Elec,neg,max}* für die elektrische Maschine 6.

Sollten die Anforderungen kleiner als die Giermomentengrenzen *M_{z,Elec,pos,max}* oder *M_{z,Elec,neg,max}* sein, dann wird die gesamte Anforderung in einen vorläufigen ersten Bremsmomentenanteil *M_{Elec,M_{z}}* für die elektrische Maschine 6 der ersten Aktuatoranordnung 5 umgerechnet. Ist hingegen eine der Giermomentengrenzen *M_{z,Elec,pos,max}* oder *M_{z,Elec,neg,max}* überschritten, dann wird zusätzlich ein vorläufiger zweiter Bremsmomentenanteil *M_{Hyd,M_{z}}* für die zweite Aktuatoranordnung 8 der hydraulischen Bremse berechnet.

In einer als siebtes Modul 17 dargestellten Stellerarbitrierung laufen alle Bremsmomentenanteile der querdynamischen Stabilisierungsfunktionen für den Rad-Kombi-Steller 9 zusammen. Hier werden neben dem vorläufigen ersten Bremsmomentenanteil *M_{Elec,M_{z}}* und dem vorläufigen zweiten Bremsmomentenanteil *M_{Hyd,M_{z}}* als Ausgangsgrößen des sechsten Moduls 16 auch ein dritter Bremsmomentenanteil *M_{Rom}* als Ausgangsgröße des dritten Moduls 13 als jeweilige Eingangsgrößen verwendet.

In den Modulen 16 und 17 wird in einem ersten Schritt in Abhängigkeit von einer Bremsanforderung festgelegt, wie hoch ein gesamtes Bremsmoment *M_{Rad}* an dem Rad 3 ist. In einem weiteren Schritt wird festgelegt, welcher tatsächliche oder finale Bremsmomentenanteil *M_{Elec}* an die elektrische Maschine 6 der ersten Aktuatoranordnung 5 und welcher finale Bremsmomentenanteil *M_{Hyd}* an die zweite Aktuatoranordnung 8 der hydraulischen Bremse geht. Dies geschieht vorliegend mit der aus dem Radmodell als Ausgangsgröße gewonnenen Momentengrenze *M_{Elec,min}* als weiteren Eingangsgröße in dem Modul 17. Die Summe der beiden Bremsmomentenanteile entspricht dem Bremsmoment *M_{Rad}* an dem Rad 3.

Die hier gewählte Struktur, insbesondere die funktionale Aufteilung zwischen den Modulen 16 und 17, ergibt sich aus einer Funktionsarchitektur mit dem Ziel, zwischen Anforderungen auf Fahrzeugebene (Giermoment) und Radebene (Radmoment) zu trennen. Dadurch lassen sich fahrdynamische Stabilisierungsfunktionen an den richtigen Stellen vorteilhaft koordinieren.

Eine unterlagerte Schlupfregelung für die zweite Aktuatoranordnung 8, dargestellt als ein achtes Modul 18, erhält als Eingangsgrößen aus dem siebten Modul 17 neben dem finalen zweiten Bremsmomentenanteil *M_{Hyd}* eine Schlupfgrenze *λ_{Hyd}* sowie von dem Rad 3 eine Raddrehzahl *ω_{Rad}* zum Regeln eines Hydraulikdrucks *p_{Hyd}* und eine unterlagerte Drehzahlregelung für die elektrische Maschine 6 der ersten Aktuatoranordnung 5, dargestellt als ein neuntes Moduls 19, erhält als Eingangsgrößen aus dem siebten Modul 17 neben dem finalen ersten Bremsmomentenanteil *M_{Elec}* eine Drehzahlgrenze *ω_{Elec},* die sich aus einer Schlupfgrenze *λ_{Rad,lim}* ergibt, sowie von dem Rad 3 die Raddrehzahl *ω_{Rad}* zum Regeln des Bremsmomentenanteils *M_{Elec}.* Beide unterlagerten Regler sorgen dafür, dass die angeforderten Grenzen eingehalten werden.

In den Modulen 17 bis 19 liegt insoweit der Kern des erfindungsgemäßen Verfahrens, der im Folgenden beschrieben werden soll. Dabei wird jeder der Aktuatoranordnungen 5, 8 jeweils zumindest ein, insbesondere radindividueller, Schlupf-Grenzwert zugeordnet, vorliegend also zumindest der ersten Aktuatoranordnung 5 die Schlupfgrenze *λ_{Rad,lim}* als ein Schlupf-Grenzwert und der zweiten Aktuatoranordnung 8 die Schlupfgrenze *λ_{Hyd}* als ein weiterer Schlupf-Grenzwert. Auch die Schlupfgrenze *λ_{Elec,min}* wird als ein weiterer Schlupf-Grenzwert berücksichtigt. Außerdem werden die Aktuatoranordnungen 5, 8 zum Erfüllen einer Bremsanforderung in Abhängigkeit von den jeweils vorgegebenen Schlupf-Grenzwerten angesteuert.

Wie die Bremsmomentenverteilung mittels der Stellerarbitrierung in Modul 17 sowie die entsprechende Regelung mittels der Schlupfregelung und der Drehzahlregelung in den Modulen 18 und 19 im Rahmen des Verfahrens vorgenommen wird, soll nun anhand von drei Beispielen erläutert werden.

Dabei werden jeweils zumindest vier unterschiedliche Schlupf-Grenzwerte verwendet, umfassend die drei bereits genannten Schlupf-Grenzwerte. Der Einfachheit halber werden diese im Folgenden in Bezug auf ihren Wert aufsteigend nummeriert, wobei diese Nummerierung lediglich deren Unterscheidung, nicht jedoch deren Priorisierung oder Vorgabe dient, und auch keine notwendige Abhängigkeit der Grenzwerte voneinander impliziert.

Vorzugsweise wird zumindest einer der Schlupf-Grenzwerte in Abhängigkeit von einer Leistungsfähigkeit der jeweiligen Aktuatoranordnung 5, 8 und/oder einem Fahrmodus des Kraftfahrzeugs 1, insbesondere umfassend einen Komfortmodus und/oder einen Sportmodus, vorgegeben.

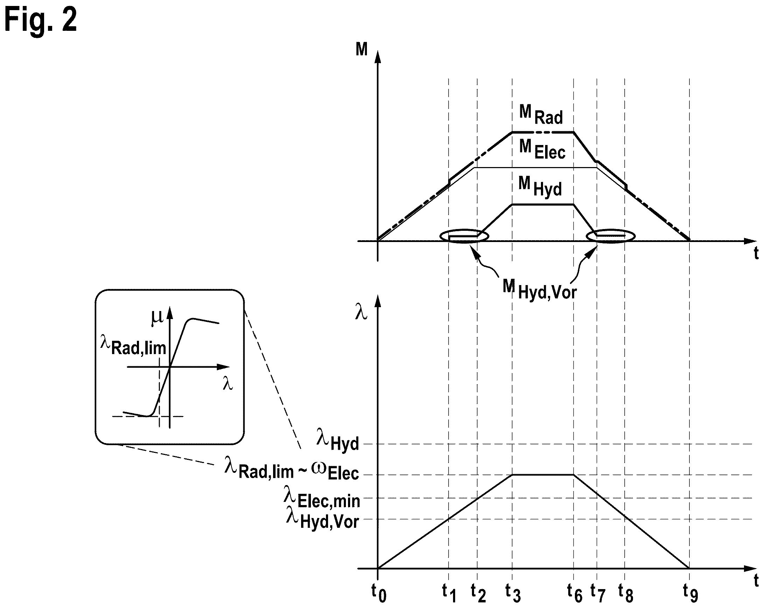

Die Figuren 2 bis 4 zeigen dabei jeweils Moment- und Schlupfverläufe während der Durchführung des Verfahrens in unterschiedlichen Fahrsituationen. Dabei ist in den Figuren 2 bis 4 jeweils in einer oberen Hälfe ein Verlaufsdiagramm von Momenten M über die Zeit t, und in einer unteren Hälfe ein Verlaufsdiagramm eines Radschlupfs λ über die Zeit t dargestellt.

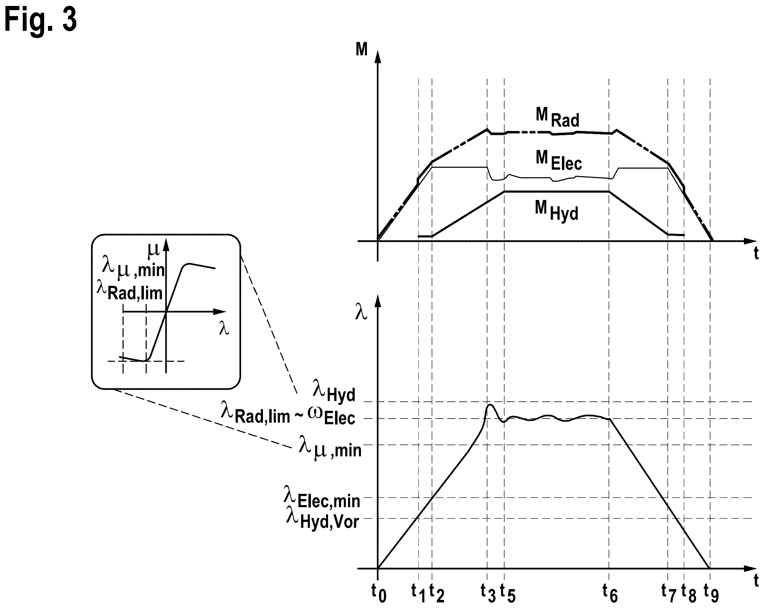

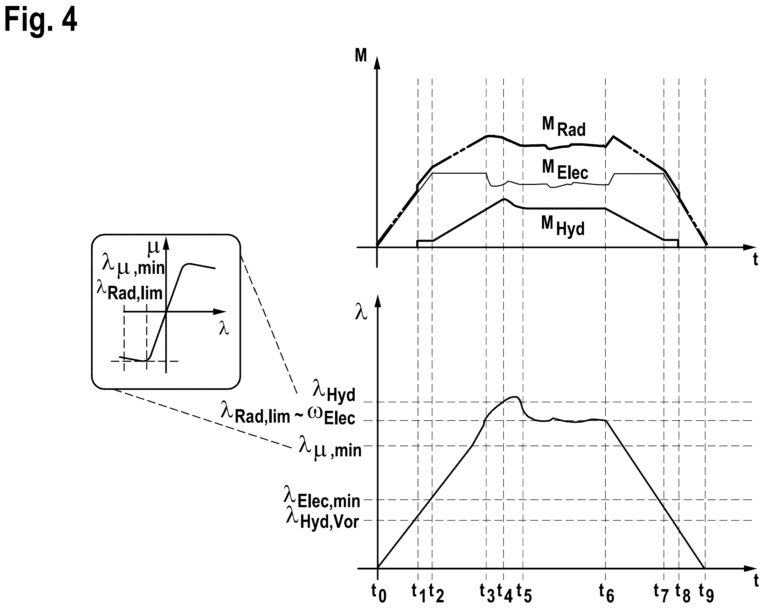

Figur 2 zeigt ein erstes Beispiel mit einem zeitlichen Verlauf der Bremsmomentenverteilung mit stabilem Radschlupfverlauf. Figur 3 zeigt ein zweites Beispiel mit einem zeitlichen Verlauf der Bremsmomentenverteilung mit instabilem Radschlupfverlauf und aktiver (elektrischer) Drehzahlregelung. Figur 4 zeigt ein drittes Beispiel mit einem zeitlichen Verlauf der Bremsmomentenverteilung mit instabilem Radschlupfverlauf und aktiver (hydraulischer) Schlupf- und (elektrischer) Drehzahlregelung.

Die Nummerierung der im Folgenden beschriebenen Zeitpunkte ist dabei derart gewählt, dass an denselben Zeitpunkten jeweils zumindest annähernd dasselbe passiert, um die gezeigten Beispiele besser vergleichen zu können.

Das Kraftfahrzeug wird zunächst auf eine Bremsanforderung überwacht. Es wird jeweils ein Schlupf-Istwert des Radschlupfs λ ermittelt, und, sobald eine entsprechende Bremsanforderung erkannt wurde, nur die erste Aktuatoranordnung 5, insbesondere mittels einer Drehzahlregelung der elektrischen Maschine 6, in Abhängigkeit von dem Schlupf-Istwert zum Erzeugen eines elektrischen Bremsmoments angesteuert.

Begonnen wird also jeweils mit einer Aktuierung der elektrischen Maschine 6 der ersten Aktuatoranordnung 5 zu einem Zeitpunkt t₀. Ein ansteigender erster Bremsmomentenanteil *M_{Elec}* wird auf die elektrische Maschine 6 gegeben. Der Radschlupf steigt daraufhin ebenfalls an. Der erste Bremsmomentenanteil *M_{Elec}* entspricht dabei dem elektrischen Bremsmoment.

Es wird nun ein erster Schlupf-Grenzwert vorgegeben und der zweiten Aktuatoranordnung 8 zugeordnet. Wenn der Schlupf-Istwert den ersten Schlupf-Grenzwert zumindest erreicht, insbesondere überschreitet, wird die zweite Aktuatoranordnung 8, insbesondere die der Hydraulikpumpe zugeordnete elektrische Maschine, zusätzlich zum Vorbefüllen eines Hydraulikkreises der Radbremsvorrichtung 7 angesteuert.

In der Figur 2 ist erkennbar, dass ab einem Zeitpunkt t₁, bei dem eine Schlupfgrenze *λ_{Hyd,Vor}* erreicht ist, ein zusätzliches, konstantes Bremsmoment *M_{Hyd,Vor}* für die hydraulische Radbremsvorrichtung 7 vorgegeben und hydraulisch vorbefüllt wird, bis zu einem Zeitpunkt t₂. Dadurch werden mögliche Schwächen der hydraulischen Radbremsvorrichtung 7 beim Druckaufbau vermieden. Die Schlupfgrenze *λ_{Hyd,Vor}* entspricht dem ersten Schlupf-Grenzwert.

Sie wird insbesondere derart hoch gewählt, dass ein sicheres Anlegen der Bremsbeläge möglich ist. Beispielsweise wird sie in Abhängigkeit von einem Wert eines hydraulischen Drucks, insbesondere in einem Bereich bis 10 bar, beispielsweise von 5 bar, und/oder einem cp-Kennwert der Reibbremse festgelegt.

Es wird weiter ein zweiter Schlupf-Grenzwert vorgegeben und der zweiten Aktuatoranordnung 8 zugeordnet. Wenn der Schlupf-Istwert den zweiten Schlupf-Grenzwert zumindest erreicht, insbesondere überschreitet, wird die zweite Aktuatoranordnung 8 zum Erzeugen eines zusätzlichen hydraulischen Bremsmoments angesteuert.

Bis zu dem Zeitpunkt t₂ wird ansonsten ausschließlich elektrisch gesteuert, also die erste Aktuatoranordnung 5 verwendet, und zwar bis zu der bereits bei dem Radmodell verwendete Schlupfgrenze *λ_{Elec,min}.* Die Schlupfgrenze *λ_{Elec,min}* entspricht damit dem zweiten Schlupf-Grenzwert. Der zweite Schlupf-Grenzwert ist damit größer als der erste Schlupf-Grenzwert.

Die Ansteuerung der elektrischen Maschine erfolgt insbesondere mit einem Soll-Moment, das sich aus der Schlupfgrenze ergibt. Die Schlupfgrenze führt zu einem maximalen Moment. Liegt die gesamte Bremsanforderung innerhalb dieses Bereichs, wird dieses maximale Moment als Soll-Moment gestellt.

Die Schlupfgrenze *λ_{Elec,min}* wird zu dem Zeitpunkt t₂ erreicht beziehungsweise überschritten. Es wird nun ein weiterer ansteigender zweiter Bremsmomentenanteil *M_{Hyd}* durch die zweite Aktuatoranordnung 8 auf die hydraulische Radbremsvorrichtung 7 gegeben und damit hydraulisch gesteuert. Der zweite Bremsmomentenanteil *M_{Hyd}* entspricht dem zusätzlichen hydraulischen Bremsmoment.

Es wird weiter ein dritter Schlupf-Grenzwert vorgegeben und der ersten Aktuatoranordnung 5 zugeordnet. Wenn der Schlupf-Istwert den dritten Schlupf-Grenzwert zumindest erreicht, insbesondere überschreitet, wird die erste Aktuatoranordnung 5 zum Einhalten des dritten Schlupf-Grenzwerts, insbesondere zum Reduzieren des Schlupf-Istwerts auf den dritten Schlupf-Grenzwert, angesteuert.

In der Figur 2 ist erkennbar, dass die Ansteuerung der zweiten Aktuatoranordnung 8 bis zu einer Schlupfgrenze *λ_{Rad,ₗᵢₘ}* erfolgt, die zu einem Zeitpunkt t₃ erreicht ist. Weil diese Schlupfgrenze nicht überschritten wird, erfolgt auch keine Regelung durch die erste Aktuatoranordnung 5. Die Schlupfgrenze *λ_{Rad,ₗᵢₘ}* entspricht dabei dem dritten Schlupf-Grenzwert. Der dritte Schlupf-Grenzwert ist damit größer als der erste und der zweite Schlupf-Grenzwert.

In dem beschriebenen Beispiel liegt die gesamte Bremsanforderung höher als das maximale Moment für die elektrische Maschine 6, sodass der verbleibende Momentenanteil als Soll-Moment für die Radbremsvorrichtung 7 vorgegeben wird. Der Soll-Schlupf für die Maschine 6 wird durch die Schlupfgrenze *λ_{Elec,min}* in einen definierten Schlupfbereich begrenzt. Der Soll-Schlupf für die Radbremsvorrichtung 8 ergibt sich durch eine definierte Erhöhung der Schlupfgrenze *λ_{Elec,min}* auf die Schlupfgrenze *λ_{Rad,lim}.*

Die Vorgabe des jeweiligen Soll-Schlupfs für die jeweilige Aktuatoranordnung 5, 8 dient insbesondere nur zur Absicherung der Momentenvorgabe. Das Stellsignal für die jeweilige Aktuatoranordnung 5, 8 ist dann immer das Moment. Nur im Falle eines Radschlupfes oberhalb der Soll-Schlupf-Vorgabe für die jeweilige Aktuatoranordnung 5, 8 wird ein unterlagerter Radregler aktiv und limitiert den Radschlupf auf die Soll-Schlupf-Vorgabe. Das wird in den Figuren 3 und 4 noch im Detail beschrieben werden.

In Abhängigkeit von dem dritten Schlupf-Grenzwert wird außerdem ein Drehzahl-Grenzwert für die elektrische Maschine 6 der ersten Aktuatoranordnung 5 vorgegeben, und bei Erreichen oder Überschreiten des dritten Schlupf-Grenzwerts die elektrische Maschine 6 in Abhängigkeit von dem Drehzahl-Grenzwert mittels einer Drehzahlregelung angesteuert.

Aus der Schlupfgrenze *λ_{Rad,lim}* ergibt sich dabei die bereits benannte Drehzahlgrenze *ω_{Elec}* für die elektrische Maschine 6. Die Drehzahlgrenze *ω_{Elec}* entspricht dabei dem Drehzahl-Grenzwert für die elektrische Maschine 6.

Schließlich wird ein vierter Schlupf-Grenzwert vorgegeben und der zweiten Aktuatoranordnung 8 zugeordnet. Wenn der Schlupf-Istwert den vierten Schlupf-Grenzwert zumindest erreicht, insbesondere überschreitet, wird die zweite Aktuatoranordnung 8, insbesondere die Hydraulikventilanordnung, zum Einhalten des vierten Schlupf-Grenzwerts, insbesondere zum Reduzieren des Schlupf-Istwerts auf den vierten Schlupf-Grenzwert, angesteuert.

Vorliegend wird dazu zusätzlich die ebenfalls bereits benannte Schlupfgrenze *λ_{Hyd}* vorgegeben, die immer höher als die Schlupfgrenze *λ_{Rad,ₗᵢₘ}* liegt und vorzugsweise mit einem definierten Offset zu der Schlupfgrenze *λ*_{*Rad*,*lim*} ausgeführt ist. Die Schlupfgrenze *λ_{Hyd}* entspricht dabei dem vierten Schlupf-Grenzwert. Der vierte Schlupf-Grenzwert ist damit größer ist als der erste, zweite und dritte Schlupf-Grenzwert. Beide Schlupfgrenzen *λ_{Rad,lim}* und *λ_{Hyd}* werden vorliegend eingehalten, sodass keine entsprechende Regelung notwendig ist.

In der Figur 2 liegt die Schlupfgrenze *λ_{Rad,lim}*, wie in einem Ausschnitt neben dem Radschlupfverlauf angedeutet, in einem linearen oder stabilen Bereich der Schlupfkurve des Rades 3. Der Schlupf und die genannten Momente werden bis zu einem Zeitpunkt t₆ konstant gehalten, und dann wieder abgebaut.

Aus der Figur 2 ist ersichtlich, dass das Verfahren der Bremsmomentenverteilung bei Rückgang des gesamten Bremsmoments *M_{Rad}* ab dem Zeitpunkt t₆ in umgekehrter Reihenfolge durchlaufen wird. Zuerst wird der zweite Bremsmomentenanteil *M_{Hyd}* bis zu einem Zeitpunkt t₇ reduziert bis zu dem genannten konstanten Bremsmoment *M_{Hyd,Vor}* für das Vorbefüllen.

Danach wird der erste Bremsmomentenanteil *M_{Elec}* reduziert. Ab wann und wie lange die einzelnen Bremsmomentenanteile reduziert werden, ergibt sich aus den bereits beschriebenen Schlupfgrenzen. So ist zu einem Zeitpunkt t₈ die Schlupfgrenze *λ_{Hyd,Vor}* wieder erreicht, und das zusätzliche Bremsmoment *M_{Hyd,Vor}* entfällt. Zu einem Zeitpunkt t₉ ist schließlich die Bremsanforderung vollständig erfüllt und der erste Bremsmomentenanteil *M_{Elec}* auf null reduziert.

Die in der Figur 2 dargestellte Bremsmomentenverteilung zeigt, dass durch die Reihenfolge die Anforderungen der querdynamischen Stabilisierungsfunktionen noch früher als bisher und für den Fahrer unbemerkt erfolgen können, da zuerst die elektrische Maschine 6 der Antriebsvorrichtung 4 genutzt wird. Auch wird die Radbremsvorrichtung 7 optimal mit einbezogen, indem die Druckaufbaudynamik durch ein Vorbefüllen verbessert wird und das wahrnehmbare NVH-Verhalten der Bremshydraulik erst zu einem späteren Zeitpunkt auftritt.

In der Figur 3 ist wieder die bereits beschriebene Bremsmomentenverteilung zu sehen. Es wird ebenfalls von dem Zeitpunkt t₀ bis zu dem Zeitpunkt t₂ elektrisch gesteuert, von dem Zeitpunkt t₁ bis zu dem Zeitpunkt t₂ hydraulisch vorbefüllt, und ab dem Zeitpunkt t₂ hydraulisch gesteuert.

Weil die Schlupfgrenze *λ_{Rad,lim}* nun in einem instabilen Bereich der Schlupfkurve unterhalb eines kritischen oder minimalen Schlupfwerts *λ_{µ,min}* liegt, zeigt sich im Bereich der hydraulischen Steuerung ein instabiler Radschlupfverlauf. An dem Zeitpunkt t₃ ist daher die Schlupfgrenze *λ_{Rad,ₗᵢₘ}* während der hydraulischen Steuerung überschritten. Es folgt eine Phase der elektrischen Regelung der Maschine 6 auf die Drehzahlgrenze *ω_{Elec},* um die Schlupfgrenze *λ_{Rad,lim}* einhalten zu können.

Damit ist der vorstehend beschriebene Fall eingetreten, bei dem der Schlupf-Istwert den dritten Schlupf-Grenzwert überschreitet. Entsprechend wird die erste Aktuatoranordnung 5 zum Einhalten des dritten Schlupf-Grenzwerts, insbesondere zum Reduzieren des Schlupf-Istwerts auf den dritten Schlupf-Grenzwert, angesteuert, vorliegend in Abhängigkeit von dem Drehzahl-Grenzwert mittels einer Drehzahlregelung.

An einem Zeitpunkt t₅ wird die Schlupfgrenze *λ_{Rad,ₗᵢₘ}* wieder zumindest annähernd eingehalten, beziehungsweise schwankt der Radschlupf bis zu dem Zeitpunkt t₆ nur geringfügig um die Schlupfgrenze *λ_{Rad,ₗᵢₘ}* herum. Die Schlupfgrenze *λ_{Hyd}* wird eingehalten beziehungsweise nicht überschritten. Die Drehzahlregelung ist insoweit erfolgreich, wobei zwischen den Zeitpunkten t₅ und t₆ nur der erste Bremsmomentenanteil *M_{Elec}* moduliert, und der zweite Bremsmomentenanteil *M_{Hyd}* konstant gehalten wird.

Die Ansteuerung zum Einhalten des dritten Schlupf-Grenzwerts wird also beendet, sobald der Schlupf-Istwert den Schlupf-Grenzwert unterschreitet.

Analog zu der Figur 2 wird ab dem Zeitpunkt t₆ der zweite Bremsmomentenanteil *M_{Hyd}* bis zu dem Zeitpunkt t₇ reduziert auf das konstante Bremsmoment *M_{Hyd,Vor}.* Anschließend wird der erste Bremsmomentenanteil *M_{Elec}* reduziert, wobei zu dem Zeitpunkt t₈ das zusätzliche Bremsmoment *M_{Hyd,Vor}* entfällt und zu dem Zeitpunkt t₉ der erste Bremsmomentenanteil *M_{Elec}* auf null reduziert ist.

In der Figur 4 ist erneut die bereits beschriebene Bremsmomentenverteilung zu sehen. Es wird von dem Zeitpunkt t₀ bis zu dem Zeitpunkt t₂ elektrisch gesteuert, von dem Zeitpunkt t₁ bis zu dem Zeitpunkt t₂ hydraulisch vorbefüllt, und ab dem Zeitpunkt t₂ hydraulisch gesteuert.

Weil die Schlupfgrenze *λ_{Rad,ₗᵢₘ}* erneut im instabilen Bereich der Schlupfkurve unterhalb des minimalen Schlupfwerts *λ*_{µ,*min*} liegt, zeigt sich im Bereich der hydraulischen Steuerung ein instabiler Radschlupfverlauf. An dem Zeitpunkt t₃ ist daher die Schlupfgrenze *λ_{Rad,ₗᵢₘ}* während der hydraulischen Steuerung überschritten. Es folgt eine Phase der elektrischen Regelung der Maschine 6 auf die Drehzahlgrenze *ω_{Elec},* um die Schlupfgrenze *λ_{Rad,ₗᵢₘ}* einhalten zu können.

Damit ist erneut der vorstehend beschriebene Fall eingetreten, bei dem der Schlupf-Istwert den dritten Schlupf-Grenzwert überschreitet. Entsprechend wird die erste Aktuatoranordnung 5 zum Einhalten des dritten Schlupf-Grenzwerts, insbesondere zum Reduzieren des Schlupf-Istwerts auf den dritten Schlupf-Grenzwert, angesteuert, vorliegend in Abhängigkeit von dem Drehzahl-Grenzwert mittels einer Drehzahlregelung.

Allerdings ist die Instabilität derart heftig ausgeprägt, dass während der hydraulischen Steuerung zu einem Zeitpunkt t₄ auch die Schlupfgrenze *λ_{Hyd}* überschritten wird. Es folgt jetzt eine kurze Phase bis zu dem Zeitpunkt t₅, in der hydraulisch geregelt wird, bis der Radschlupf wieder unter der Schlupfgrenze *λ_{Hyd}* ist. Parallel dazu findet die Phase der elektrischen Regelung statt, um auch die Schlupfgrenze *λ_{Rad,lim}* einzuhalten. Zwischen den Zeitpunkten t₄ und t₅ werden insoweit sowohl der erste Bremsmomentenanteil *M_{Elec}* als auch der zweite Bremsmomentenanteil *M_{Hyd}* moduliert.

Damit ist auch der vorstehend beschriebene Fall eingetreten, bei dem der Schlupf-Istwert den vierten Schlupf-Grenzwert überschreitet. Entsprechend wird zusätzlich die zweite Aktuatoranordnung 8, insbesondere die Hydraulikventilanordnung, zum Einhalten des vierten Schlupf-Grenzwerts, insbesondere zum Reduzieren des Schlupf-Istwerts auf den vierten Schlupf-Grenzwert, angesteuert.

Nach dem Zeitpunkt t₅ wird auch die Schlupfgrenze *λ_{Rad,ₗᵢₘ}* wieder zumindest annähernd eingehalten, beziehungsweise schwankt der Radschlupf bis zu dem Zeitpunkt t₆ nur geringfügig um die Schlupfgrenze *λ_{Rad,ₗᵢₘ}* herum. Die kombinierte Schlupfregelung und Drehzahlregelung mittels der beiden Aktuatoranordnungen 5, 8 war erfolgreich. Zwischen den Zeitpunkten t₅ und t₆ wird erneut nur der erste Bremsmomentenanteil *M_{Elec}* moduliert, und der zweite Bremsmomentenanteil *M_{Hyd}* konstant gehalten.

Die Ansteuerung zum Einhalten des dritten und vierten Schlupf-Grenzwerts wird beendet, sobald der Schlupf-Istwert den jeweiligen Schlupf-Grenzwert unterschreitet.

Analog zu den Figuren 2 und 3 wird ab dem Zeitpunkt t₆ der zweite Bremsmomentenanteil *M_{Hyd}* bis zu dem Zeitpunkt t₇ reduziert auf das konstante Bremsmoment *M_{Hyd,Vor}.* Anschließend wird der erste Bremsmomentenanteil *M_{Elec}* reduziert, wobei zu dem Zeitpunkt t₈ das zusätzliche Bremsmoment *M_{Hyd,Vor}* entfällt und zu dem Zeitpunkt t₉ der erste Bremsmomentenanteil *M_{Elec}* auf null reduziert ist.

Die in den Figuren 3 und 4 dargestellten Beispiele verdeutlichen damit die erfindungsgemäße Regelungsstrategie des Radschlupfs durch den Rad-Kombi-Steller 9, die vollständig insbesondere dann zum Tragen kommt, wenn der Radschlupf in einen instabilen Bereich gelangt, oder bewusst ein entsprechender Radschlupf zugelassen wird, beispielsweise in einem Sportmodus, ansonsten sollte, wie in der Figur 2 dargestellt, keiner der für die jeweilige Regelung relevanten Grenzwerte überschritten werden. Durch die Wahl der Schlupfgrenzen ist gewährleistet, dass der Radschlupf hauptsächlich über die elektrische Maschine 6 geregelt wird. Dadurch werden deren Eigenschaften wie hohe Dynamik und schnelle Regelbarkeit vorteilhaft genutzt.

## Patentansprüche

1. Verfahren zum Betreiben eines Kraftfahrzeugs (1),
- wobei das Kraftfahrzeug (1) zumindest eine Achse (2) mit zumindest einem Rad (3) aufweist,
- wobei dem Rad (3) eine elektrische Antriebsvorrichtung (4) mit einer ansteuerbaren ersten Aktuatoranordnung (5), aufweisend eine elektrische Maschine (6), zugeordnet ist, und
- wobei dem Rad (3) eine Radbremsvorrichtung (7) mit einer ansteuerbaren zweiten Aktuatoranordnung (8) zugeordnet ist,
**dadurch gekennzeichnet,**
- **dass** jeder der Aktuatoranordnungen (5,8) jeweils zumindest ein, insbesondere radindividueller, Schlupf-Grenzwert (λ_{Hyd,Vor}, λ_{Elec,min}, λ_{Rad,lim}, λ_{Hyd}) zugeordnet wird, und
- **dass** die Aktuatoranordnungen (5,8) zum Erfüllen einer Bremsanforderung in Abhängigkeit von den vorgegebenen Schlupf-Grenzwerten (λ_{Hyd,Vor}, λ_{Elec,min}, λ_{Rad,lim}, λ_{Hyd}) angesteuert werden.

2. Verfahren nach dem vorhergehenden Anspruch, wobei die Radbremsvorrichtung eine weitere elektrische Maschine aufweist und/oder wobei die Radbremsvorrichtung eine hydraulische Radbremsvorrichtung ist und eine einer Hydraulikpumpe zugeordnete elektrische Maschine und/oder eine Hydraulikventilanordnung aufweist.

3. Verfahren nach einem der vorhergehenden Ansprüche, **dadurch gekennzeichnet, dass** zumindest einer der Schlupf-Grenzwerte (λ_{Hyd,Vor}, λ_{Elec,min}, λ_{Rad,lim}, λ_{Hyd}) in Abhängigkeit von einer Leistungsfähigkeit der jeweiligen Aktuatoranordnung (5, 8) und/oder einem Fahrmodus des Kraftfahrzeugs (1), insbesondere umfassend einen Komfortmodus und/oder einen Sportmodus, vorgegeben wird.

4. Verfahren nach einem der vorhergehenden Ansprüche, **dadurch gekennzeichnet, dass** ein Schlupf-Istwert des Radschlupfs (λ) ermittelt wird, und dass zunächst nur die erste Aktuatoranordnung (5), insbesondere mittels einer Drehzahlregelung der elektrischen Maschine (6), in Abhängigkeit von dem Schlupf-Istwert zum Erzeugen eines elektrischen Bremsmoments (M_{Elec}) angesteuert wird.

5. Verfahren nach Anspruch 4, **dadurch gekennzeichnet, dass** ein erster Schlupf-Grenzwert (λ_{Hyd,Vor}) vorgegeben und der zweiten Aktuatoranordnung (8) zugeordnet wird, und dass, wenn der Schlupf-Istwert den ersten Schlupf-Grenzwert (λ_{Hyd,Vor}) zumindest erreicht, insbesondere überschreitet, die zweite Aktuatoranordnung (8), insbesondere die der Hydraulikpumpe zugeordnete elektrische Maschine, zusätzlich zum Vorbefüllen eines Hydraulikkreises der Radbremsvorrichtung (7) angesteuert wird.

6. Verfahren nach einem der Ansprüche 4 und 5, **dadurch gekennzeichnet, dass** ein zweiter Schlupf-Grenzwert (λ_{Elec,min}) vorgegeben und der zweiten Aktuatoranordnung (8) zugeordnet wird, wobei der zweite Schlupf-Grenzwert (λ_{Elec,min}) insbesondere größer ist als der erste Schlupf-Grenzwert (λ_{Hyd,Vor}), und dass, wenn der Schlupf-Istwert den zweiten Schlupf-Grenzwert (λ_{Elec,min}) zumindest erreicht, insbesondere überschreitet, die zweite Aktuatoranordnung (8) zum Erzeugen eines zusätzlichen, insbesonderehydraulischen, Bremsmoments (M_{Hyd}) angesteuert wird.

7. Verfahren nach einem der Ansprüche 4 bis 6, **dadurch gekennzeichnet, dass** ein dritter Schlupf-Grenzwert (λ_{Rad,lim}), insbesondere in einem instabilen Bereich einer Radschlupfkurve, vorgegeben und der ersten Aktuatoranordnung (5) zugeordnet wird, wobei der dritte Schlupf-Grenzwert (λ_{Rad,lim}) insbesondere größer ist als der erste und/oder zweite Schlupf-Grenzwert (λ_{Hyd,Vor}, λ_{Elec,min}), und dass, wenn der Schlupf-Istwert den dritten Schlupf-Grenzwert (λ_{Rad,lim}) zumindest erreicht, insbesondere überschreitet, die erste Aktuatoranordnung (5) zum Einhalten des dritten Schlupf-Grenzwerts (λ_{Rad,lim}), insbesondere zum Reduzieren des Schlupf-Istwerts auf den dritten Schlupf-Grenzwert (λ_{Rad,lim}), angesteuert wird.

8. Verfahren nach Anspruch 7, **dadurch gekennzeichnet, dass** in Abhängigkeit von dem dritten Schlupf-Grenzwert (λ_{Rad,lim}) ein Drehzahl-Grenzwert (ω_{Elec}) für die elektrische Maschine (6) der ersten Aktuatoranordnung (5) vorgegeben wird, und dass die elektrische Maschine (6) in Abhängigkeit von dem Drehzahl-Grenzwert (ω_{Elec}) mittels einer Drehzahlregelung angesteuert wird.

9. Verfahren nach einem der Ansprüche 4 bis 8, **dadurch gekennzeichnet, dass** ein vierter Schlupf-Grenzwert (λ_{Hyd}) vorgegeben und der zweiten Aktuatoranordnung (8) zugeordnet wird, wobei der vierte Schlupf-Grenzwert (λ_{Hyd}) insbesondere größer ist als der erste, zweite und/oder dritte Schlupf-Grenzwert (λ_{Hyd,Vor}, λ_{Elec,min}, λ_{Rad,lim}), und dass, wenn der Schlupf-Istwert den vierten Schlupf-Grenzwert (λ_{Hyd}) zumindest erreicht, insbesondere überschreitet, die zweite Aktuatoranordnung (8), insbesondere die Hydraulikventilanordnung, zum Einhalten des vierten Schlupf-Grenzwerts, insbesondere zum Reduzieren des Schlupf-Istwerts auf den vierten Schlupf-Grenzwert (λ_{Hyd}), angesteuert wird.

10. Verfahren nach einem der Ansprüche 7 bis 9, **dadurch gekennzeichnet, dass** die Ansteuerung zum Einhalten des dritten und/oder vierten Schlupf-Grenzwerts (λ_{Rad,lim}, λ_{Hyd}) beendet wird, sobald der Schlupf-Istwert den jeweiligen Schlupf-Grenzwert (λ_{Rad,lim}, λ_{Hyd}) unterschreitet.

11. Computerprogrammprodukt zur Ausführung auf einer Computereinrichtung (10), **dadurch gekennzeichnet, dass** das Computerprogrammprodukt bei bestimmungsgemäßem Gebrauch ein Verfahren nach einem der vorhergehenden Ansprüche ausführt.

12. Maschinenlesbares Speichermedium mit einem Computerprogrammprodukt nach Anspruch 11.

13. Computereinrichtung (10), insbesondere elektronische Steuervorrichtung und/oder Steuereinrichtung, für ein Kraftfahrzeug (1), **dadurch gekennzeichnet, dass** die Computereinrichtung (10) speziell dazu hergerichtet ist, das Computerprogrammprodukt nach Anspruch 11 auszuführen.
